# EUROPEAN PATENT APPLICATION

(11) **EP 2 529 972 A1**
(43) Date of publication of application: **05.12.2012**
(21) Application number: 10844615.4
(22) Date of filing: 29.01.2010
(51) Int. Cl.: B60L 7/10, B60K 6/48, B60W 10/18, B60W 20/00

(54) **VEHICLE CONTROL DEVICE**

(71) Applicant: Toyota Jidosha Kabushiki Kaisha, Aichi 471-8571 (JP)
(72) Inventor: TSUMORI, Chika, Toyota-shi Aichi 471-8571 (JP); TABATA, Mitsuhiro, Toyota-shi Aichi 471-8571 (JP); TOYORA, Sachio, Toyota-shi Aichi 471-8571 (JP); OKAMURA, Yukari, Toyota-shi Aichi 471-8571 (JP); UEKI, Nobukazu, Toyota-shi Aichi 471-8571 (JP)
(74) Representative: Albutt, Anthony John
(86) International application number: PCT/JP2010/051289
(87) International publication number: WO 2011/092855

(57) **Abstract**

A vehicle control device of a vehicle that can travel with inertia without transmitting power of an engine (10) to drive wheels (WL, WR) and stops an operation of an engine (10) that generates power by fuel during an inertia travel as well as prohibits a regeneration control of a regeneration device (50) that regenerates kinetic energy during a travel, wherein when it is estimated that predetermined energy in various types of energy in a vehicle fluctuates during the inertia travel, a regeneration control prohibition state of the regeneration device (50) is released during the inertia travel.

## Description

### Field

The present invention relates to a vehicle control device of a vehicle that can be caused to travel with inertia without transmitting power of a power source to drive wheels.

### Background

Conventionally, there are vehicles that can be caused to travel by transmitting power of a power source to drive wheels and thereafter caused to travel by inertia by disconnecting the transmission of the power to the drive wheels. For example, Patent Literatures 1 and 2 described below disclose a control device of a hybrid vehicle which uses an engine and a motor as drive sources and can travel by inertia. A speed maintaining device of Patent Literature 1 alternately repeats a travel in which the engine is driven and an inertia travel in which the engine is stopped as well as the motor does not perform any of regeneration and power running. Further, when an inter-vehicle distance to a preceding vehicle becomes shorter than a minimum inter-vehicle distance according to a vehicle speed of a driver's own vehicle, a vehicle travel control device of Patent Literature 2 causes the driver's own vehicle to travel by inertia by stopping a generation of a drive force, and when the inter-vehicle distance becomes longer than a maximum inter-vehicle distance according to the vehicle speed of the driver' own vehicle during an inertia travel, the vehicle travel control device starts to generate the drive force and causes the driver's own vehicle to travel.

### Citation List

### Patent Literature

Patent Literature 1: Japanese Laid-open Patent Publication No. 2007-187090
Patent Literature 2: Japanese Laid-open Patent Publication No. 2007-291919

### Summary

### Technical Problem

However, during a conventional inertia travel, kinetic energy generated in a vehicle at the time is not regenerated. Accordingly, conventionally, since kinetic energy, which is, for example, generated by deceleration during an inertia travel cannot be collected as electric energy, electric power cannot be regenerated to a battery during an inertia travel and thus there is a possibility that a performance of equipment using the electric power may be degraded due to an insufficient remaining storage amount of the battery.

Thus, an object of the present invention is to improve a disadvantage of the conventional example and to provide a vehicle control device capable of regenerating kinetic energy as necessary even during the inertia travel. Solution to Problem

In order to achieve the above mentioned object, a vehicle control device of a vehicle according to the present invention that can travel with inertia without transmitting power of a power source to drive wheels and stops an operation of a mechanical power source that generates power by fuel during an inertia travel as well as prohibits a regeneration control of a regeneration device that regenerates kinetic energy during a travel, wherein when it is estimated that predetermined energy in various types of energy in a vehicle fluctuates during the inertia travel, a regeneration control prohibition state of the regeneration device is released during the inertia travel.

Here, it is desirable that the fluctuation of the predetermined energy in the various types of energy is at least one of a fluctuation of thermal energy caused by a brake operation of a brake device, a fluctuation of electric energy of a battery, or a fluctuation of kinetic energy.

Here, it is desirable that whether or not thermal energy fluctuates by a brake operation of a brake device is estimated based on vehicle forward information of a driver's own vehicle or based on the vehicle forward information and operation information of a turn signal lamp.

Further, it is desirable that whether or not electric energy of a battery fluctuates is estimated based on information of a total power consumption of electric devices during the inertia travel, based on operation information of the turn signal lamp or based on information of a gradient angle or a gradient of a travel road.

Further, it is desirable that whether or not kinetic energy fluctuates is estimated based on information of a gradient angle or a gradient of a down-slope road. Advantageous Effects of Invention

During an inertia travel, when certain energy such as thermal energy and electric energy in a vehicle fluctuates, a type of performance degradation may be observed due to the fluctuation. When it is estimated that predetermined energy of various types of energy in a vehicle fluctuates during an inertia travel, since the vehicle control device according to the present invention releases a regeneration control prohibition state of the regeneration device during the inertia travel, a performance degradation due to the fluctuation of the energy can be suppressed.

### Brief Description of Drawings

FIG. 1 is a view illustrating an example of a vehicle of a first embodiment that is a target to which a vehicle control device according to the present invention is applied.
FIG. 2 is a view explaining a fuel economy travel.
FIG. 3 is a view explaining the fuel economy travel and is a view illustrating a state that a regeneration control during an inertia travel is prohibited and a state that the regeneration control during the inertia travel is permitted.
FIG. 4 is a flowchart explaining main control operations of the vehicle control device according to the present invention.
FIG. 5 is a flowchart explaining an example of an operation for determining whether or not a regeneration control of the control operations is necessary.
FIG. 6 is a flowchart explaining an example of the operation for determining whether or not the regeneration control of the control operations is necessary.
FIG. 7 is a flowchart explaining an example of the operation for determining whether or not the regeneration control of the control operations is necessary.
FIG. 8 is a flowchart explaining an example of the operation for determining whether or not the regeneration control of the control operations is necessary.
FIG. 9 is a view illustrating an example of a vehicle of a second embodiment that is a target to which the vehicle control device according to the present invention is applied.
FIG. 10 is a flowchart explaining an example of an operation for determining whether or not the regeneration control of the control operations is necessary.
FIG. 11 is a flowchart explaining an example of the operation for determining whether or not the regeneration control of the control operations is necessary.

### Description of Embodiments

A vehicle control device according to the present invention is a control device which permits a control at the time of inertia travel (so-called free run travel), in which power of a power source is not transmitted to drive wheels of a vehicle, and which determines whether or not a kinetic energy regenerating operation is executed during a fuel economy improving operation at the time of inertia travel. To show more specifically, the vehicle control device performs the determination according to a state of various types of energy (thermal energy generated in the vehicle, electric energy provided with the vehicle, and the like) in the vehicle, and when it is estimated that no fluctuation is caused to the various types of energy, the vehicle control device prohibits a regeneration control of kinetic energy during an inertia travel, and when it is estimated that energy, which causes a predetermined fluctuation, exists in the various types of energy, the vehicle control device releases the prohibition state of the regeneration control. Here, a vehicle, which becomes a target to which the vehicle control device is applied, includes at least a mechanical power source (which uses mechanical energy as power) that generates power by fuel and a regeneration device that regenerates kinetic energy and permits an inertia travel as well as improves a fuel economy by stopping the mechanical power source during the inertia travel in principle. Embodiments of the vehicle control device according to the present invention will be explained below in detail based on drawings. Note that the present invention is by no means limited by the embodiments.

### [First Embodiment]

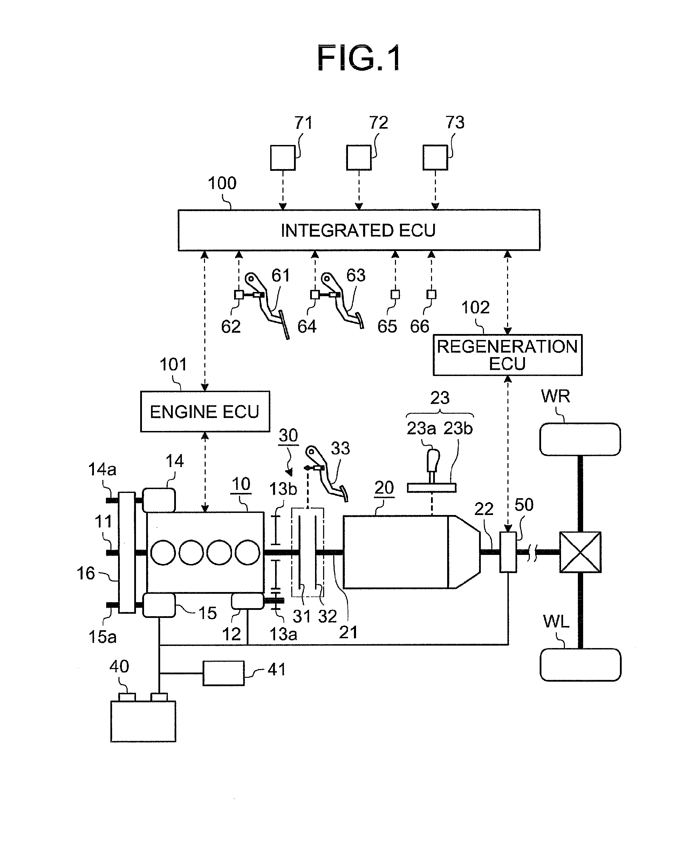

An first embodiment of a vehicle control device according to the present invention will be explained based on FIGS. 1 to 8.

First, an example of a vehicle that is a target to which the vehicle control device of the first embodiment is applied will be explained based on FIG. 1. The vehicle exemplified here includes an engine 10 as a mechanical power source, a manual transmission 20 having plural gear shift stages, and a clutch 30 that can connect and disconnect a transmission of torque between the engine 10 and the manual transmission 20.

Considered as the engine 10 are an internal combustion engine, an external combustion engine, and the like which output mechanical power (engine torque) from a crank shaft (output shaft) 11. In the engine 10, an operation of the engine is controlled by an electronic control device 101 (hereinafter, called "engine ECU") for engine. The engine torque is transmitted from an input shaft 21 to a current gear shift stage of the manual transmission 20 via the clutch 30, output from an output shaft 22, and transmitted to driving wheels WL and WR as a drive force.

The engine 10 is provided with a starter motor 12 which is driven and controlled by the engine ECU 101 when the engine 10 starts. The starter motor 12 is driven by electric power supplied from a battery 40, and an output of the starter motor 12 is transmitted to the crank shaft 11 via a power transmitting unit (here, gear pairs 13a, 13b). The gear pairs 13a, 13b are always in a meshed state.

Further, the engine 10 is provided with various auxiliary devices which are associated with the rotation of the crank shaft 11. For example, exemplified as the auxiliary devices are a compressor of a not shown air conditioner (so-called air conditioner compressor) 14, an alternator 15, and the like, and drive shafts 14a, 15a of the compressor 14 and the alternator 15 are coupled with the crank shaft 11 via a power transmitting unit (a pulley, a belt, and the like) 16. While the engine 10 is being driven (while the crank shaft 11 is being rotated), the alternator 15 can generate electric power and store the electric power in the battery 40. Here, the vehicle is provided with a battery condenser unit (battery boost converter) 41 different from the battery 40, and the electric power can be stored also in the battery condenser unit 41.

The clutch 30 is, for example, a friction clutch device which has a first engaging section 31 rotated integrally with the crank shaft 11 and a second engaging section 32 rotated integrally with the input shaft 21 of the manual transmission 20 and is configured so as to be able to switch an engaged state for engaging the crank shaft 11 with the input shaft 21 and a released state (non-engaged state) for releasing (disengaging) the crank shaft 11 from the input shaft 21. The engaged state described here is a state in which torque can be transmitted between the crank shaft 11 and the input shaft 21, and the released state (non-engaged state) is a state in which torque cannot be transmitted between the crank shaft 11 and the input shaft 21. A switch operation between the engaged state and the released state of the clutch 30 is mechanically performed via a link mechanism, a wire, and the like in response to that a driver operates a clutch pedal 33.

When the driver operates a gear shift operation device (a so-called shift lever 23a, a shift gage 23b, and the like) 23, the manual transmission 20 switches a gear shift stage. When the driver operates the clutch 30 into a released state as well as moves the shift lever 23a to a neutral position on the shift gage 23b, the manual transmission 20 is placed in a so-called neutral state in which no torque is transmitted between the input shaft 21 and the output shaft 22.

Further, the vehicle is provided with an electronic control device (hereinafter, called "an integrated ECU") 100 which integrally controls an operation of the vehicle in its entirety. The integrated ECU 100 can transmit and receive information such as signals detected by various sensors and control instructions between the engine ECU 101 and a regeneration ECU 102 to be described later, respectively. In the first embodiment, the vehicle control device is composed of at least the integrated ECU 100, the engine ECU 101, and the regeneration ECU 102.

When the driver operates the clutch 30 into the released state or operates the manual transmission 20 into the neutral state during an acceleration travel or during a constant speed travel, the vehicle can continuously travel by inertia by a distance according to a vehicle speed and the like at the time of operation. Hereinafter, the operation for putting the clutch 30 in the released state or the operation for putting the manual transmission 20 in the neutral state are called as an inertia travel operation. Here, at the time of inertia travel, since engine torque cannot be transmitted to the driving wheels WL, WR, it is not preferable from a viewpoint of a fuel economy performance to continuously drive the engine 10 at the time of inertia travel because fuel is continuously consumed even in an idling state. Accordingly, in the vehicle, when an inertia travel detecting device detects an inertia travel, the integrated ECU 100 sends an instruction for stopping the engine 10 to the engine ECU 101. With the operation, the vehicle can improve the fuel economy performance during an inertia travel.

The inertia travel detecting device can be composed of, for example, the integrated ECU 100, an accelerator pedal 61, an acceleration operation detecting unit (an accelerator open degree sensor, an accelerator operation amount detecting sensor, and the like) 62, a brake pedal 63, a brake operation detecting unit (a brake operation amount detecting sensor and the like) 64. In the case, when the brake pedal 63 is not depressed within a predetermined time after the driver removes a foot from the accelerator pedal 61 in a depressed state, the integrated ECU 100 can estimate that an inertia travel is performed based on signals of the acceleration operation detecting unit 62 and the brake operation detecting unit 64 which detected the above operation. It is sufficient to set the predetermined time based on a shift time of the driver, who is assumed as, for example, a main user of the vehicle or who is an ordinary driver, during which the driver shifts from an acceleration operation to a brake operation.

To further improve a detection accuracy, it is preferable to take a transition of a result of detection by a vehicle forward/backward acceleration detecting unit (a vehicle forward/backward acceleration sensor and the like) 65 into consideration. That is, in a state that the driver removes the foot from the accelerator pedal 61 and the brake pedal 63 (a state that an accelerator is turned off and a brake is turned off), when a deceleration of the vehicle is larger than a predetermined amount, it can be estimated that the manual transmission 20 is engaged with any of the gear shift stages and a so-called engine brake is applied. In contrast, when the deceleration of the vehicle is smaller than the predetermined amount, it can be estimated that the manual transmission 20 is placed in the neutral state and the inertia travel is performed. The integrated ECU 100 may detect the inertia travel based on the difference. Further, when it is intended to improve the detection accuracy by other method, a detection device, which can find a state of the manual transmission 20, that is, which can find any of the gear shift stages is used or otherwise the manual transmission 20 is in the neutral state, may be prepared, and an estimation device as to the state may be used. The estimation device employs a technology, which is well-known in a vehicle mounted with a manual transmission that is used to find a gear shift stage when, for example, an engine is controlled, and determines the above state by a comparison between a rotation angular speed of the driving wheels WL, WR estimated from an output request value of the engine 10 and an actual rotation angular speed of the driving wheels WL, WR, and the like. Further, the inertia travel detecting device may be composed of an operation unit such as a button and a lever, which informs the vehicle side that the vehicle travels by inertia, and the integrated ECU 100. In the case, the integrated ECU 100 is caused to find that the vehicle performs the inertia travel when the driver operates an operation unit in a compartment.

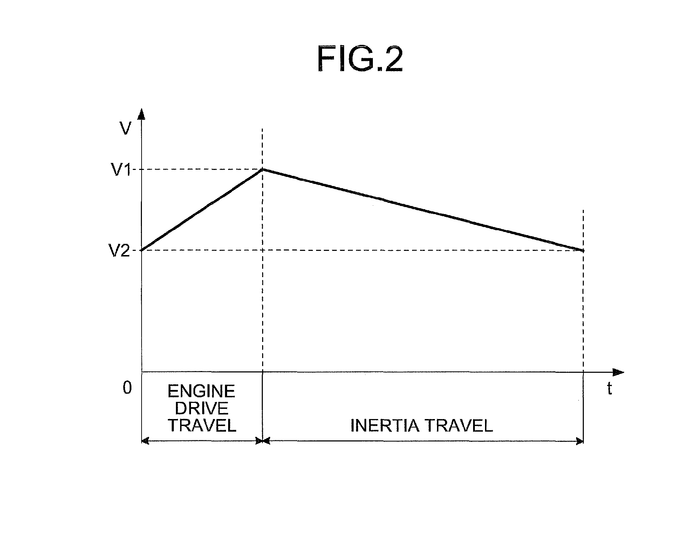

The vehicle of the first embodiment can improve the fuel economy performance by stopping the engine 10 during the inertia travel as described above. Accordingly, the vehicle can improve a fuel economy during a travel by alternately repeating a travel which is performed by transmitting engine torque to the driving wheels WL, WR (hereinafter, called "an engine drive travel") and the inertia travel in which the engine 10 is stopped. As shown in, for example, FIG. 2, the driver performs acceleration by the engine drive travel and performs an inertia travel operation when the vehicle reaches a certain vehicle speed (an inertia travel start vehicle speed) V1. When the inertia travel is detected, the integrated ECU 100 instructs to stop the engine 10. A vehicle speed is reduced during the inertia travel. When the vehicle speed V is reduced to a certain magnitude (engine drive travel return vehicle speed) V2, the driver performs a release operation of the inertia travel. When the inertia travel operation is an operation of only a depression operation of the clutch pedal 33, the release operation is an operation performed to cause the clutch 30 to become the engaged state, and when the inertia travel operation is an operation for placing the manual transmission 20 in the neutral state, the release operation is an operation that starts from an release operation of the clutch 30 and finishes by engaging the clutch 30 by operating the manual transmission 20 to a gear shift stage according to the vehicle speed V. The driver depresses the accelerator pedal 61 simultaneously with the engagement operation of the clutch 30. With the operation, the integrated ECU 100 starts the engine 10 by the starter motor 12 and causes acceleration to be performed again by the engine drive travel. In a vehicle during travelling, the fuel economy is improved by repeating the operation.

In contrast, in the vehicle, since the power transmitting unit 16 is not operated during the inertia travel, electric power cannot be generated by the alternator 15 and it becomes impossible to store electric power in the battery 40. Accordingly, the vehicle is provided with a regeneration device 50 capable of regenerating kinetic energy generated during the travel so that electric power can be generated also at the time the vehicle is decelerated while the engine 10 stops (while the crank shaft 11 stops).

Considered as the regeneration device 50 are a generator such as an alternator, a motor that can operate as a generator, a motor/generator that can operate as a motor or a generator, and the like. The regeneration device 50 is disposed on a power transmission path from the output shaft 22 of the manual transmission 20 to the driving wheels WL, WR. When, for example, the generator and the like are employed, they are attached so that a rotor of them and a rotating shaft on the power transmission path such as the output shaft 22 rotate integrally. FIG. 1 exemplifies that the generator as the regeneration device 50 is disposed on the output shaft 22.

An operation of the regeneration device 50 is controlled by the electronic control device (hereinafter, called "the regeneration ECU") 102 of the regeneration device 50. When the regeneration ECU 102 receives a regeneration control execution instruction from the integrated ECU 100, the regeneration ECU 102 drives the regeneration device 50 for regeneration and causes the regeneration device 50 to generate electric power. With this operation, when the regeneration device 50 is input with mechanical power (regeneration torque) from the output shaft 22, the regeneration device 50 can convert the mechanical energy, which is kinetic energy, to electric energy and store the electric energy in the battery 40 or in the battery condenser unit 41 as electric power.

Incidentally, it can be said that the travel that repeats an engine drive travel and an inertia travel improves the fuel economy by storing kinetic energy by the acceleration travel during the engine drive travel and consuming the kinetic energy during the inertia travel. That is, during the inertia travel, the vehicle is caused to travel making use of the kinetic energy stored by the engine drive travel as it is without discarding the kinetic energy as thermal energy of an engine brake. Accordingly, when the regeneration device 50 is subjected to the regeneration control during the inertia travel in the midst of the repeat travel (hereinafter, called "a fuel economy travel"), since a part of the stored kinetic energy is used for regeneration and converted to electric energy, an energy conversion loss is generated and an effect for improving the fuel economy is prevented. Accordingly, at the time of inertia travel during the fuel economy travel, the regeneration control of the regeneration device 50 is prohibited and the fuel economy is preferentially improved in principle.

Here, during the inertia travel, there is a case in which a brake force of a brake device 71 (which is composed of, for example, a caliper and a rotor) becomes necessary. It can be said that the case in which the brake force of the brake device 71 becomes necessary is a case that thermal energy is generated in the brake device 71 during the inertia travel and increases. The case is when a brake force requested by a vehicle is not satisfied such as when, for example, there is a possibility that an inter-vehicle distance to a preceding vehicle becomes shorter than a target minimum inter-vehicle distance by deceleration only by the inertia travel, or when there is a possibility that the vehicle passes through a target stop position by the deceleration only by the inertia travel at the time the vehicle is stopped by releasing the fuel economy travel due to a red signal and the like. Accordingly, in the case, since there is a possibility that a travel performance is degraded by a fluctuation of thermal energy of the brake device 71 to an increase side, it is preferable to drive the regeneration device 50 for regeneration and to apply a so-called regeneration brake to the driving wheels WL, WR. With the operation, at the time, since the brake force requested by the vehicle can be generated by the regeneration brake without the brake force by the brake device 71, the degradation of the travel performance due to the fluctuation of the thermal energy can be suppressed as well as the kinetic energy is not discharged as the thermal energy due to the brake operation of the brake device 71. Otherwise, even if the brake force by the brake device 71 is reduced, since the brake force requested by the vehicle can be generated by the regeneration brake, a discharge amount of the kinetic energy as the thermal energy can be suppressed to a low level as well as the degradation of the travel performance due to the fluctuation of the thermal energy can be suppressed. That is, at the time, since the degradation of the travel performance due to the fluctuation of the thermal energy can be suppressed as well as the kinetic energy stored by the engine drive travel can be converted to the electric energy by the regeneration brake and the battery 40 can be charged by suppressing the brake force of the brake device 71 to 0 or to a low level, the kinetic energy can be effectively used.

Further, in a case when a turn signal lamp 73 is operated due to entry to an intersection and the like and deceleration is performed, since the brake force of the brake device 71 becomes necessary, this corresponds also to the case that the thermal energy fluctuates to the increase side. Accordingly, also in the case, it is preferable to operate the regeneration device 50 for regeneration and to apply the regeneration brake to the driving wheels WL, WR.

Further, when there is a possibility that remaining battery electric power, which corresponds to a remaining storage amount of the battery 40, is smaller than a total power consumption of electric devices (devices such as an auxiliary device and the like operated by the electric power of the battery 40) during the inertia travel, it is preferable to generate electric power by driving the regeneration device 50 for regeneration even if the fuel economy is sacrificed to some extent. This operation enables all the necessary electric devices to be used during the inertia travel. It can be said that this is a case when the electric energy of the battery 40 provided with the vehicle is so greatly reduced that the energy becomes insufficient during the inertia travel. That is,
in the case, since there is a possibility that a performance of the electric devices is degraded by the fluctuation of the electric energy, it is preferable to subject the regeneration device 50 to the regeneration control and to cause the regeneration device 50 to generate electric power. Note that, the remaining storage amount of the battery 40 which is referred to this case means a remaining storage amount when an empty state is used as a lower limit or means a remaining storage amount when a lower limit storage amount, which corresponds to a limit of use of the battery 40, is used as a reference.

Further, when a travel road during the inertia travel is a down-slope road (down gradient), since the deceleration of the vehicle is small, there is a possibility that the vehicle begins acceleration depending on a gradient of the road. Then, there is a possibility that the driver feels uncomfortable in the acceleration during the inertia travel and suppresses the acceleration of the vehicle by operating the brake device 71. Accordingly, in the case, it is preferable to generate the regeneration brake to the driving wheels WL, WR by driving the regeneration device 50 for regeneration and to suppress the acceleration of the vehicle depending on the gradient. It can be said that this is a case when thermal energy is generated by the brake device 71 and increased during the inertia travel by the brake operation for suppressing acceleration thereafter. That is, in the case, since there is a possibility that the vehicle is accelerated by an increase of the kinetic energy according to a gradient angle or a gradient of the down-slope road and the travel performance is degraded, it is preferable to suppress the acceleration by generating the regeneration brake by driving the regeneration device 50 for regeneration.

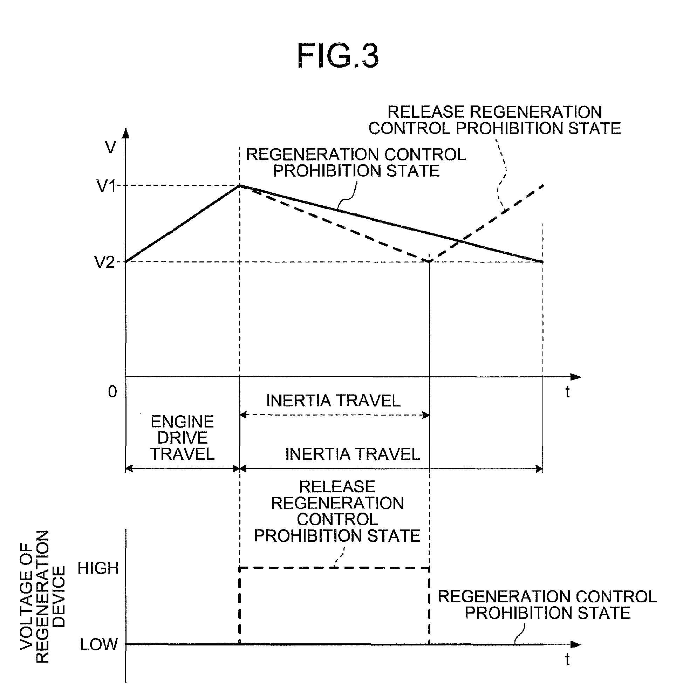

Thus, the vehicle control device of the first embodiment is configured such that when a predetermined energy fluctuation (a fluctuation of the thermal energy due to the brake operation of the brake device 71, the fluctuation of the electric energy of the battery 40, and a fluctuation of the kinetic energy) occurs in the vehicle during the inertia travel, a regeneration control prohibition state of the regeneration device 50 is released. Accordingly, at the time of release of the regeneration control prohibition state, since the deceleration of the vehicle is increased as compared with the time at which the regeneration control prohibition state is employed, an allowance of reduction of the vehicle speed V is increased and the vehicle speed V is reduced to the engine drive travel return vehicle speed V2 at an early stage as shown by an upper view of FIG. 3 and the travel returns to the engine drive travel. Further, at the time of release, a charged amount to the battery 40 is increased as shown in a lower view of FIG. 3 by increasing a voltage of the regeneration device 50.

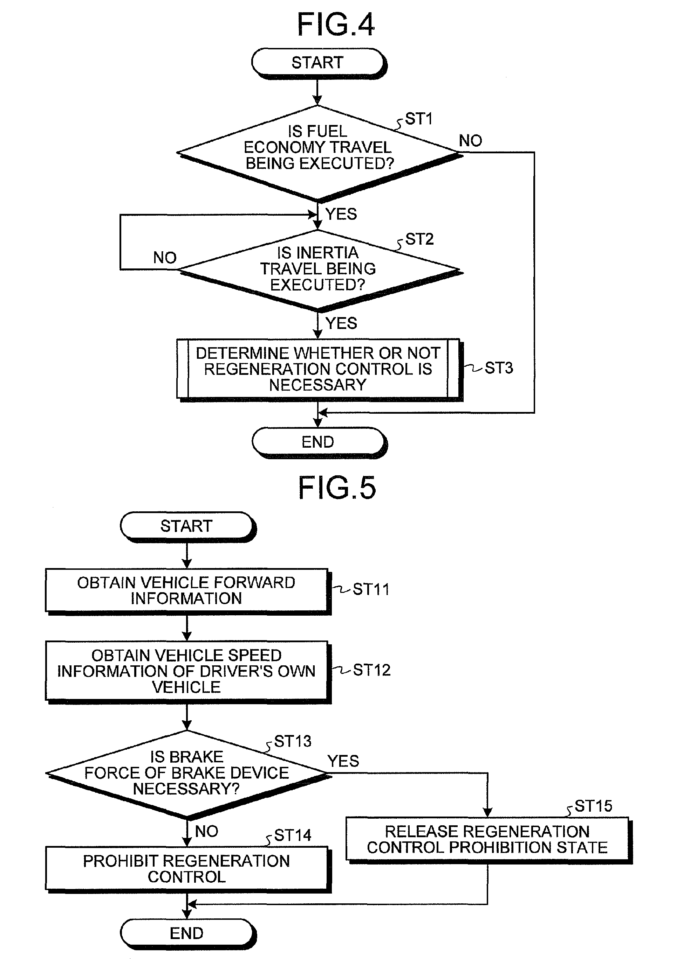

An operation for determining whether or not the regeneration control of the regeneration device 50 is necessary during the inertia travel will be explained below based on flowcharts of FIG. 4 to FIG. 8.

First, as shown in the flowchart of FIG. 4, the integrated ECU 100 determines whether or not the fuel economy travel described above is being executed (step ST1). Since the integrated ECU 100 detects whether or not the fuel economy travel is performed, the determination at step ST1 is performed making use of information provided with the integrated ECU 100 by itself.

Unless the fuel economy travel is performed, the integrated ECU 100 finishes the arithmetic process. When the fuel economy travel is being executed, the integrated ECU 100 determines whether or not the inertia travel is being performed (step ST2). The determination at step ST2 is performed making use of the inertia travel detecting device described above. Then, unless the inertia travel is not being performed, the integrated ECU 100 repeats the determination, and, when the integrated ECU 100 determines that the inertia travel is being performed, the integrated ECU 100 determines whether or not the regeneration control by the regeneration device 50 is necessary (step ST3). The determination whether or not the regeneration control is necessary at step ST3 will be explained as to respective cases.

First, the determination whether or not the regeneration control is necessary according to a state ahead of a vehicle such as when a vehicle travels ahead of the driver's own vehicle described above and when a traffic signal ahead of the driver's own vehicle is red, and the like will be explained using a flowchart of FIG. 5.

First, the integrated ECU 100 obtains of the driver's own vehicle from a forward information obtaining device 72 (step ST11).

Considered as the vehicle forward information is an object such as for example, a vehicle and an obstacle. The forward information obtaining device 72 in this case is an object detector which detects a forward object and makes use of an image pick-up device such as, for example, a millimeter wave radar and a CCD camera. The integrated ECU 100 obtains information such as the presence or absence of a forward object, a position of the object, a distance and a relative speed between the object and the driver's own vehicle, and the like based on a signal detected by the object detector. Further, as the vehicle forward information, color of a forward traffic signal and a position of a stop line, a distance up to the stop line, and the like are considered as the information. As the forward information obtaining device 72 in the case, a communication device, an image pick-up device, and the like, which receives the information from, for example, an information transmission device located on a side of a road is used. The integrated ECU 100 obtains color of a forward traffic signal and a distance to a stop line based on the information received by the communication device. Further, the integrated ECU 100 obtains information of the color of a forward traffic signal and a position of the stop line and the distance to the stop line based on an image of the image pick-up device.

Further, the integrated ECU 100 obtains vehicle speed information of the driver's own vehicle from a vehicle speed detector 66 (step ST12). As the vehicle speed detector 66, for example, a vehicle speed sensor, and a wheel speed sensor, and the like are used.

Subsequently, the integrated ECU 100 estimates whether or not it is necessary to generate a brake force of the brake device 71, in other words, the integrated ECU 100 estimates whether or not a fluctuation of thermal energy generated by a brake operation of the brake device 71 to an energy increase side occurs (step ST13).

When the integrated ECU 100 estimates that it is not necessary to generate the brake force of the brake device 71 (thermal energy does not fluctuate), the integrated ECU 100 keeps the regeneration control of the regeneration device 50 in the prohibit state (step ST14). With the operation, in the vehicle, since the energy conversion loss is not generated as described above, the fuel economy can be improved during the fuel economy travel.

In contrast, when the integrated ECU 100 estimates that it is necessary to generate a brake force of the brake device 71 (thermal energy fluctuates), the integrated ECU 100 releases the regeneration control prohibition state of the regeneration device 50 (step ST15). With the operation, in the vehicle, a requested brake force can be generated to a vehicle by the regeneration brake due to the regeneration control, and when the requested brake force cannot be generated by the regeneration brake, by brake force of the brake device 71 for compensating an insufficient amount of requested brake force. Further, in the vehicle, since the kinetic energy stored by the engine drive travel can be charged to the battery 40 as electric power by the regeneration brake by suppressing the brake force of the brake device 71 to 0 or low, the kinetic energy can be effectively used.

When for example, a travelling vehicle exists ahead of the driver's own vehicle, the integrated ECU 100 estimates a change of an inter-vehicle distance between the preceding vehicle and the driver's own vehicle based on the vehicle speed V and a travel resistance of the driver's own vehicle and the inter-vehicle distance and a relative speed between the driver's own vehicle and the preceding vehicle at step ST13. At the time, the integrated ECU 100 performs the estimation assuming that the vehicle speed of the preceding vehicle does not change. Note that a deceleration and a travel distance of the driver's own vehicle, a time until the driver's own vehicle reaches a predetermined position such as a stop line and the like, and the vehicle speed V when the driver's own vehicle travels to the predetermined position during the inertia travel can be determined from the vehicle speed V and the travel resistance of the driver's own vehicle. Then, when the integrated ECU 100 determines that there is a possibility that a shortest inter-vehicle distance in the estimation becomes shorter than a target minimum inter-vehicle distance and there is a possibility that the brake device 71 generates a brake force by an brake operation of the driver thereafter because, for example, the vehicle speed V of the driver's own vehicle is faster than the preceding vehicle, the integrated ECU 100 estimates that it is necessary to generate the brake force of the brake device 71 (thermal energy fluctuates) at step ST13. In contrast, when the estimated inter-vehicle distance is equal to or more than the target minimum inter-vehicle distance, the integrated ECU 100 estimates that it is not necessary to generate the brake force of the brake device 71 (thermal energy does not fluctuate) at step ST13. In the case, the inter-vehicle distance to the preceding vehicle can be kept equal to or more than the target minimum inter-vehicle distance regardless whether or not the regeneration control of regeneration device 50 is performed in addition to the effect.

Here in the exemplification, when it is estimated that it is not necessary to generate the brake force of the brake device 71 (thermal energy does not fluctuate), the computation process is finished while keeping the regeneration control of the regeneration device 50 in the prohibition state. However, since this is because that the vehicle speed of the preceding vehicle is assumed to be constant, and an actual vehicle speed of the preceding vehicle is not necessarily constant. Accordingly, it is preferable that after the integrated ECU 100 determines to keep the regeneration control of the regeneration device 50 in the prohibition state while the fuel economy travel is being continued, the integrated ECU 100 returns to step ST11 and causes a similar computation process to be repeated.

Further, when an obstacle exists ahead of the driver's own vehicle, the integrated ECU 100 estimates a travel distance of the driver's own vehicle during the inertia travel based on the vehicle speed V of the driver's own vehicle and the travel resistance of the driver's own vehicle at step ST13. Then, the integrated ECU 100 compares information of the estimated travel distance with information of the distance to the obstacle obtained at step ST11, and when the estimated travel distance is longer than the distance to the obstacle, the integrated ECU 100 determines that there is a possibility that the brake device 71 generates a brake force by a brake operation of the driver thereafter and estimates that it is necessary to generate the brake force of the brake device 71 at step ST13 (thermal energy fluctuates). In contrast, when the estimated travel distance is shorter than the distance to the obstacle, the integrated ECU 100 estimates that it is not necessary to generates the brake force of the brake device 71 at step ST13 (thermal energy does not fluctuate). In the case, a contact with the obstacle can be prevented in addition to the above effect regardless whether or not the regeneration control of the regeneration device 50 is performed.

Further, when it is necessary to stop a vehicle at a predetermined stop position because the forward traffic signal is red, and the like, it is sufficient to replace the position of the obstacle with the stop position, and thereby the driver's own vehicle can be stopped until a predetermined stop position is reached in addition to the above effect regardless whether or not the regeneration control of the regeneration device 50 is performed.

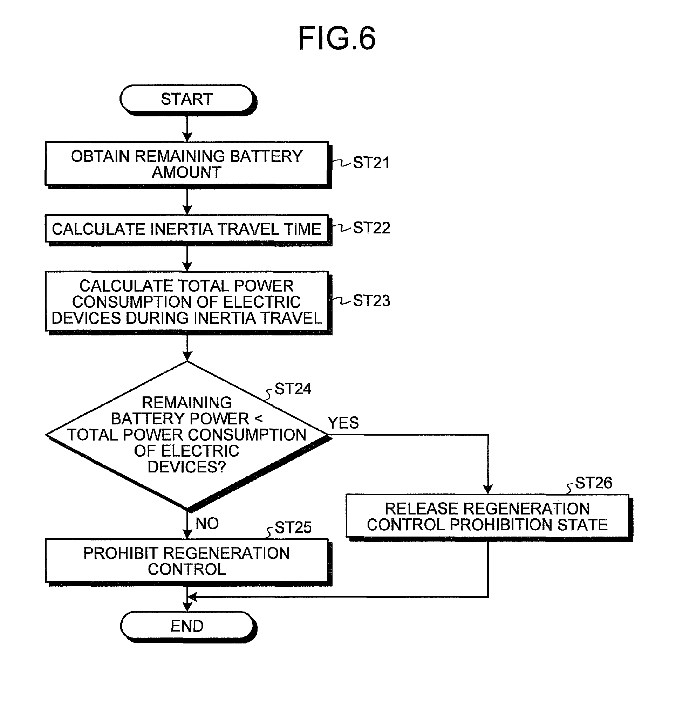

Next, a determination whether or not the regeneration control is necessary in response to a state of the battery 40 will be explained using a flowchart of FIG. 6.

First, the integrated ECU 100 obtains information of a remaining amount of the battery 40 (step ST21). Ordinarily, the vehicle side is provided with information of a remaining storage amount of the battery 40 (remaining voltage) obtained from a voltmeter and the like, it is sufficient to make use of the information at step ST21.

Further, the integrated ECU 100 determines a travel time of single inertia travel performed during the fuel economy travel (hereinafter, called "an inertia travel time") (step ST22). Since it is considered that a pattern of the engine drive travel and a pattern of the inertia travel of one step during the fuel economy travel is considered approximately the same, the inertia travel time can be determined from the pattern. For example, an inertia travel time before one step may be determined and an average value of inertia travel times of respective steps may be determined.

The integrated ECU 100 obtains a total power consumption of the electric devices used during the inertia travel (that is, within the determined inertia travel time) (step ST23). When, for example, auxiliary devices such as the compressor 14 are operated, electric power consumed thereby is determined, and when, for example, audio equipment and a car navigation system are operated, electric power consumed thereby is determined, and the total power consumption is determined by adding the power consumption of all the electric devices.

The integrated ECU 100 compares the remaining battery electric power corresponding to the remaining storage amount of the battery 40 with the total power consumption of the electric devices (step ST24).

Then, when the remaining battery electric power remains in an amount equal to or more than the total power consumption of the electric devices, the integrated ECU 100 keeps the regeneration control of the regeneration device 50 in the prohibition state (step ST25). With the operation, in the vehicle, since the energy conversion loss is not generated as described above, the fuel economy during the fuel economy travel can be improved.

In contrast, when the remaining battery electric power becomes smaller than the total power consumption of the electric devices, the integrated ECU 100 estimates that there is a possibility that the remaining battery electric power fluctuates to a reduction side in such a degree that the electric energy of the battery 40 becomes insufficient and releases the regeneration control prohibition state of the regeneration device 50 (step ST26). With the operation, in the vehicle, since the kinetic energy stored by the regeneration control during the engine drive travel can be generated as electric power, the total power consumption of the electric devices can be entirely covered.

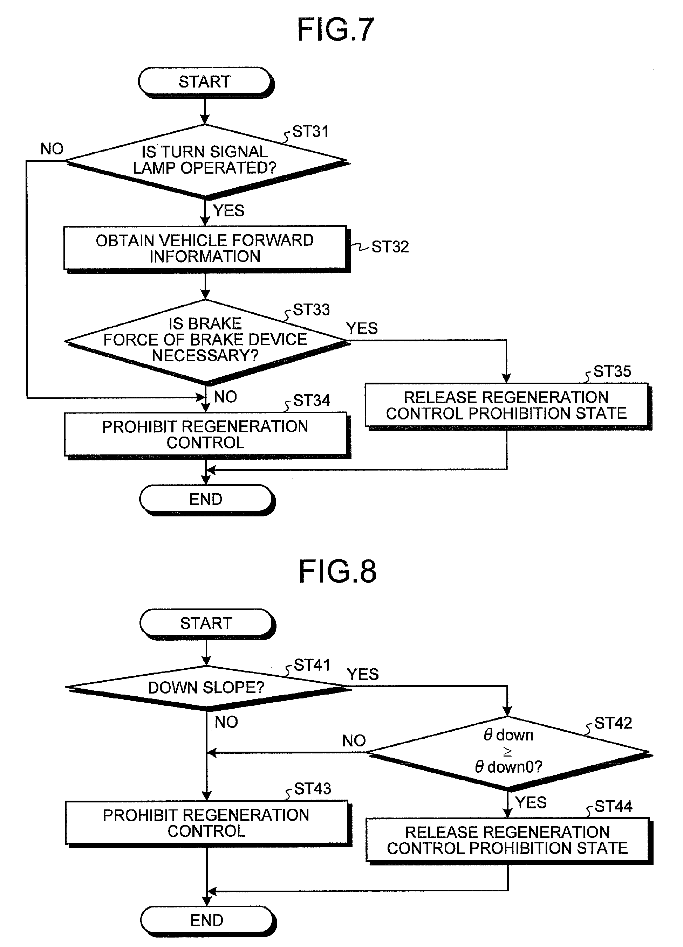

Next, a determination whether or not the regeneration control is necessary according to the presence or absence of the operation of the turn signal lamp 73 described above will be explained using a flowchart of FIG. 7.

First, the integrated ECU 100 determines whether or not the turn signal lamp 73 is operated by the driver (step ST31).

Here, when the turn signal lamp 73 is not operated, the integrated ECU 100 goes to step ST34 to be described later and keeps the regeneration control of the regeneration device 50 in the prohibition state.

In contrast, when the turn signal lamp 73 is operated, the integrated ECU 100 obtains vehicle forward information of the driver's own vehicle from the forward information obtaining device 72 (step ST32). At step ST32, the integrated ECU 100 obtains information of the presence or absence of existence of a forward object and information of the presence or absence of a right/left turn position such as a forward intersection point. As to the presence or absence of the intersection point, for example, map information of a car navigation system can be used in addition to the imaging device. Accordingly, at the time, the car navigation system performs a role as the forward information obtaining device 72.

Subsequently, the integrated ECU 100 estimates whether or not it is necessary to generate the brake force of the brake device 71 based on the vehicle forward information (the presence or absence of fluctuation of thermal energy) likewise step ST13 of FIG. 5 (step ST33). When, for example, the vehicle forward information indicates that an object exists forward, since it is considered that an operation of the turn signal lamp 73 performed by the driver is a preparatory operation such as a vehicle lane change operation for avoiding the object, it is sufficient for the integrated ECU 100 to estimate that the brake force of the brake device 71 is not necessary. In contrast, when the vehicle forward information indicates that a right/left turn position exists forward, since it is considered that the operation of the turn signal lamp 73 performed by the driver is a preparatory operation for turning to right or left, it is sufficient for the integrated ECU 100 to estimate that the brake force of the brake device 71 becomes necessary.

When the integrated ECU 100 estimates that it is not necessary to generate the brake force of the brake device 71 (thermal energy does not fluctuate), the integrated ECU 100 keeps the regeneration control of the regeneration device 50 in the prohibition state (step ST34). With the operation, in the vehicle, since the energy conversion loss is not generated as described above, the fuel economy during the fuel economy travel can be improved.

In contrast, when the integrated ECU 100 estimates that it is necessary to generate the brake force of the brake device 71 (thermal energy fluctuates), the integrated ECU 100 releases the regeneration control prohibition state of the regeneration device 50 (step ST35). With the operation, in the vehicle, deceleration can be performed by the regeneration brake due to the regeneration control and the brake force of the brake device 71 before the right/left turn is performed. Further, in the vehicle, since the kinetic energy stored by the engine drive travel can be charged to the battery 40 as electric power by the regeneration brake, the kinetic energy can be effectively used.

Next, a determination whether or not the regeneration control is necessary in response to a gradient of the travel road described above will be explained using a flowchart of FIG. 8.

First, the integrated ECU 100 determines whether or not a travel road inclines downward (step ST41). The determination may be made by comparing vehicle forward/backward acceleration on a flat road at the time of inertia travel which is determined by, for example, the vehicle speed V with actual forward/backward acceleration of a vehicle forward/backward acceleration detecting unit 65 or may be made by using a gradient sensor and the like.

As a result, when it is determined that the travel road inclines downward, the integrated ECU 100 compares a gradient angle θdown of the travel road with a reference gradient angle θdown0 (step ST42). It is sufficient to estimate the gradient angle θdown based on a detection signal and the like of the vehicle forward/backward acceleration detecting unit 65. Further, the reference gradient angle θdown0 is set to, for example, a minimum gradient angle in a gradient angle of a down-slope in which there is possibility of acceleration during the inertia travel. With the operation, when the gradient angle θdown is equal to or more than the reference gradient angle θdown0, it can be estimated that there is a possibility that acceleration is performed during the inertia travel. In contrast, the gradient angle θdown is smaller than the reference gradient angle θdown0, it can be estimated that although deceleration is small, deceleration is continuously performed during the inertia travel. Note that, at step ST42, information of a gradient (%) may be used in place of the gradient angle θdown.

When the integrated ECU 100 determines that the travel road does not incline downward or even if the travel road inclines downward, when the gradient angle θdown is smaller than the reference gradient angle θdown0, the integrated ECU 100 keeps the regeneration control of the regeneration device 50 in the prohibition state (step ST43). With the operation, in the vehicle, since the energy conversion loss is not generated as described above, the fuel economy can be improved during the fuel economy travel. Further, in the down-slope as described above, since acceleration thereafter by the engine drive travel can be performed by engine torque that is relatively smaller than that on a flat road and an up-slope road, a heat efficiency of the engine 10 can be lowered. Accordingly, in the case, since the power of the battery 40 is consumed (electric energy is reduced) by using the electric devices during the inertia travel and the remaining storage amount of the battery 40 is dared to be reduced while keeping the regeneration control prohibition state as it is, an amount of power generated by the alternator 15 during the engine drive travel thereafter can be increased and a charge efficiency of the battery 40 can be increased.

In contrast, when it is determined that the gradient angle θdown is equal to or more than the reference gradient angle θdown0, the integrated ECU 100 estimates that it is necessary to generate the brake force of the brake device 71 thereafter (thermal energy fluctuates) and releases the regeneration control prohibition state of the regeneration device 50 (step ST44). With the operation, in the vehicle, acceleration during the inertia travel can be suppressed by the regeneration brake caused by the regeneration control and the brake force of the brake device 71. Further, in the vehicle, since the kinetic energy stored by the engine drive travel can be charged to the battery 40 as electronic power by the regeneration brake, the kinetic energy can be effectively used. Further, in the vehicle, although there is a possibility that acceleration is performed by the kinetic energy which is fluctuated to an increase side in response to a gradient angle θdown (or a slope) of a down-slope road regardless that the inertia travel is being performed, the acceleration can be suppressed by the regeneration brake.

At step ST3 described above, at least one of the respective determinations of FIG. 5 to FIG. 8 explained above is executed, and when at least one of the respective determinations obtains a result that the regeneration control prohibition state of the regeneration device 50 is to be released, the regeneration control prohibition state is released.

As shown above, the vehicle control device of the first embodiment can improve the fuel economy in the fuel economy travel by stopping the engine and prohibiting the regeneration control during the inertia travel. Then, when energy, which causes the predetermined fluctuation described above, is included in various types of energy in the vehicle during the inertia travel, the vehicle control device can suppress a degradation of performance caused by the fluctuation of energy (a degradation of travel performance caused by a fluctuation of thermal energy due to the brake operation of the brake device 71, a degradation of performance of the electric devices caused by a fluctuation of electric energy of the battery 40, and a degradation of travel performance caused by a fluctuation of kinetic energy) by releasing the regeneration control prohibition state.

### [Second Embodiment]

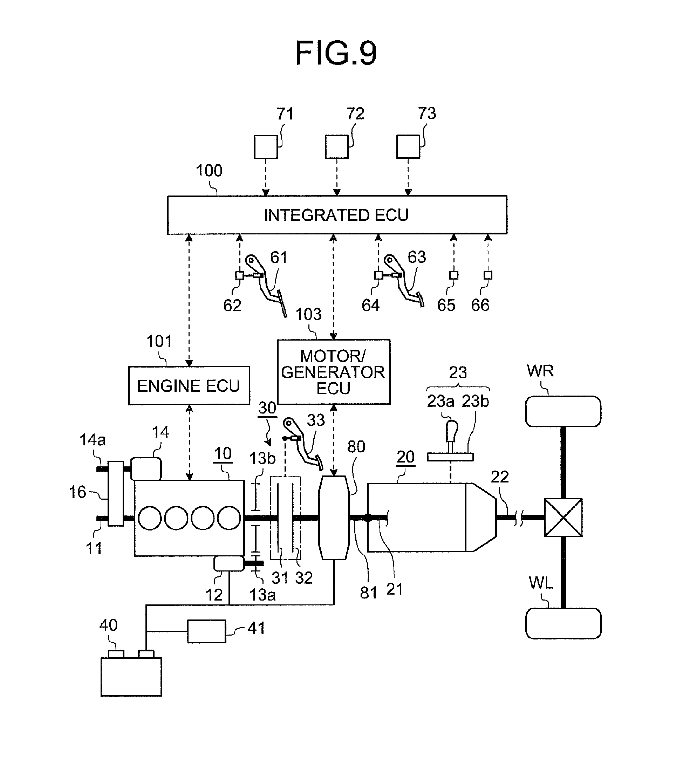

A second embodiment of the vehicle control device according to the present invention will be explained based on FIGS. 9 to 11.

A target, to which the vehicle control device of the second embodiment is applied, is a hybrid vehicle shown in FIG. 9.

The hybrid vehicle has such a configuration that the alternator 15 and the regeneration device 50 are removed from the vehicle of the first embodiment described above and a power source other than an engine 10 is disposed between a clutch 30 and a manual transmission 20. Further, in the hybrid vehicle, a motor/generator ECU 103 described below is disposed in place of the regeneration ECU 102. Note that when the engine 10 is started by a starter motor 12, gear pairs 13a, 13b of the hybrid vehicle are meshed with each other.

The other power source is an electric power source which uses mechanical energy obtained by converting electric energy and includes a motor, a generator capable of performing a powering drive or a motor/generator capable of performing both a powering drive and a regenerating drive. Here, an explanation will be made using a motor/generator 80 as an example. An operation of the motor/generator 80 is controlled by an electronic control device (hereinafter, called "a motor/generator ECU) 103 for motor/generator. At the time of powering drive, the motor/generator 80 functions as a motor and outputs mechanical power (powering torque) from a rotating shaft 81 by electric power supplied from a battery 40. The rotating shaft 81 is coupled with a second engaging section 32 of the clutch 30 and an input shaft 21 of a manual transmission 20 so as to be able to rotate integrally therewith. In contrast, at the time of regenerating drive, the motor/generator 80 functions as a generator likewise the regeneration device 50 of the first embodiment, and when mechanical power (regeneration torque) is input from the rotating shaft 81, the motor/generator 80 converts the mechanical energy to electric energy and stores the electric energy to the battery 40 and the like as electric power. When the regenerating drive is performed, the motor/generator ECU 103 performs a function similar to the regeneration ECU 102 of the first embodiment.

Also in the hybrid vehicle, an integrated ECU 100 determines whether or not a regeneration control of the motor/generator 80 is necessary likewise the flowchart of FIG. 4 of the first embodiment.

When the integrated ECU 100 of the second embodiment determines whether or not the regeneration control is necessary in response to a state ahead of a vehicle, the integrated ECU 100 executes a computation process similar to the flowchart of FIG. 5 of the first embodiment. Accordingly, the same effect as that of the first embodiment can be obtained. Further, when the integrated ECU 100 determines whether or not the regeneration control is necessary according to a state of the battery 40, the integrated ECU 100 executes a computation process similar to the flowchart of FIG. 6 of the first embodiment. Accordingly, the same effect as that of the first embodiment can be obtained. Further, when the integrated ECU 100 determines whether or not the regeneration control is necessary according to the presence or absence of operation of a turn signal lamp 73, the integrated ECU 100 executes a computation process similar to the flowchart of FIG. 7 of the first embodiment. Accordingly, the same effect as that of the first embodiment can be obtained. Further, when the integrated ECU 100 determines whether or not the regeneration control is necessary according to a gradient of a travel road, the integrated ECU 100 executes a computation process similar to the flowchart of FIG. 8 of the first embodiment. Accordingly, the same effect as that of the first embodiment can be obtained. In these computation processes, "the regeneration device 50" is to be replaced with "the motor/generator 80".

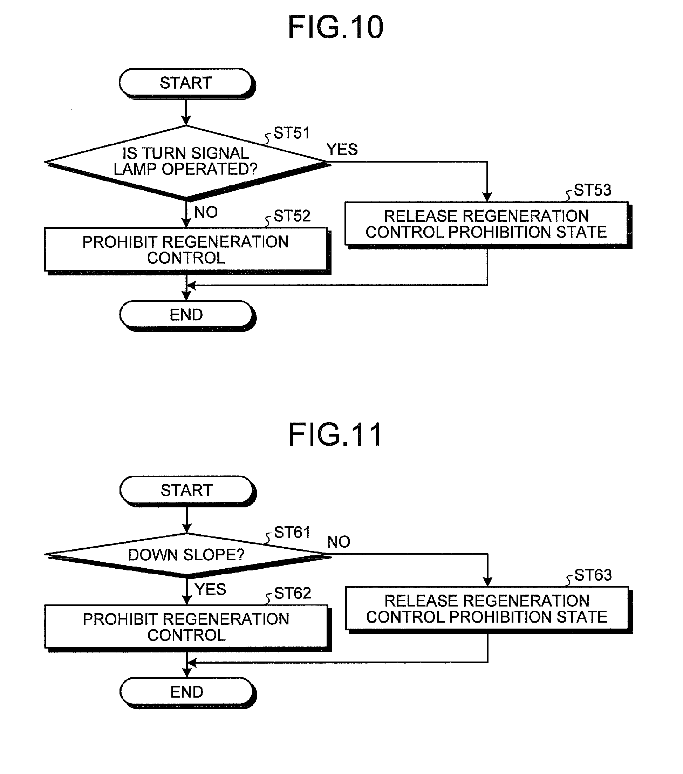

Here, the case that the turn signal lamp 73 is operated during an inertia travel is applied to also, for example, a case when acceleration for passing is performed while changing a travel lane during the inertia travel in addition to the example of the first embodiment described above. Then, at the time of acceleration during the inertia travel, a drive force may be increased by driving the motor/generator 80 as a motor, although this depends on a requested drive force. That is, at the time, electric energy of the battery 40 may be reduced because electric power of the battery 40 is consumed to drive the motor/generator 80 as the motor. Accordingly, in the hybrid vehicle of the second embodiment, the motor/generator 80 as the regeneration device may be caused to execute the regenerating drive (generator drive) only by that the turn signal lamp 73 is operated during the inertia travel regardless that an operation of the vehicle thereafter is acceleration or deceleration. With the operation, when it is found that the operation of the vehicle thereafter is acceleration, a circumstance that power supplied to the motor/generator 80 becomes insufficient can be prevented. A control operation here will be illustrated in a flowchart of FIG. 10.

First, the integrated ECU 100 in the case determines whether or not the turn signal lamp 73 is operated by a driver (step ST51).

Here, unless the turn signal lamp 73 is operated, the integrated ECU 100 keeps a regeneration control of the motor/generator 80 in a prohibition state (step ST52). With the operation, in the vehicle, since no energy conversion loss is generated, a fuel economy can be improved during a fuel economy travel.

In contrast, when the turn signal lamp 73 is operated, the integrated ECU 100 releases a regeneration control prohibition state of the motor/generator 80 (step ST53). With the operation, in the vehicle, when deceleration is performed after the operation, a degradation of travel performance caused by a fluctuation of thermal energy due to the brake operation of the brake device 71 can be suppressed likewise the flowchart of FIG. 7. Further, when acceleration for passing and the like are performed after the operation, since a degradation of travel performance caused by a fluctuation of the electric energy of the battery 40 to a reduction side can be suppressed, a degradation of motor drive force due to an insufficient supply amount of electric power can be suppressed.

Further, when a travel road during the inertia travel is an up-slope road (rising gradient), since a degree of speed reduction of the vehicle becomes large, acceleration and deceleration by the fuel economy travel are performed frequently. Accordingly, since the driver frequently repeats an inertia travel operation and a release operation of an inertia travel, there is a possibility that the driver feels the operations troublesome. Further, since the repetition of the acceleration and the deceleration with the large degree of speed reduction increases a change of acceleration and deceleration of the vehicle, there is also a possibility that the driver feels uncomfortable to a motion of the vehicle at the time. Accordingly, when the degree of speed reduction is increased during the inertia travel, there is a possibility that the driver depresses an accelerator pedal 61 regardless that a vehicle speed V is not reduced up to an engine drive travel return vehicle speed V2. At the time, a time is necessary until the driver finishes an operation of the clutch 30 and the manual transmission 20 for an engine drive travel. Further, at the time, there is a possibility that the driver depresses the accelerator pedal 61 expecting a so-called EV travel by that the motor/generator 80 is driven as the motor. Accordingly, at the time the accelerator pedal 61 is depressed during the inertia travel on an up-slope road, when, for example, a depression speed of the accelerator pedal 61 is slower than a predetermined speed, the integrated ECU 100 of the second embodiment returns a travel to the engine drive travel, whereas when the depression speed is faster than the predetermined speed, the integrated ECU 100 of the second embodiment determines that the driver desires to increase a drive force at an early stage and drives the motor/generator 80 as the motor. Accordingly, at the time, since the electric power of the battery 40 is consumed by the motor drive, electric energy of the battery 40 may be reduced. Thus, in the hybrid vehicle of the second embodiment, when a travel road during the inertia travel is an up-slope road, the battery 40 may be charged by a regeneration drive of the motor/generator 80 regardless whether or not an acceleration operation thereafter is the engine drive travel or the EV travel. With the operation, when it is found that the acceleration operation thereafter requests the EV travel, a circumstance that electric power supplied to the motor/generator 80 becomes insufficient can be prevented.

In contrast, when the travel road during the inertia travel is a down-slope road (down gradient), since acceleration by the engine drive travel thereafter can be performed by engine torque relatively smaller than that on a flat road and an up-slope road, an heat efficiency of the engine 10 can be reduced. Accordingly, in the case, an amount of power generated by the regeneration drive of the motor/generator 80 at the time of engine drive travel thereafter may be increased and the charge efficiency of the battery 40 may be increased by keeping the regeneration control prohibition state as it is regardless of a gradient angle θdown, consuming the electric power of the battery 40 by using electric devices during the inertia travel (reducing electric energy), and daring to reduce a remaining storage amount of the battery 40.

A control operation in the case will be illustrated in a flowchart of FIG. 11.

First, the integrated ECU 100 determines whether or not a travel road inclines downward likewise step ST41 of FIG. 8 (step ST61).

Then, when the integrated ECU 100 determines that the travel road inclines downward, the integrated ECU 100 keeps the regeneration control of the motor/generator 80 in the prohibition state (step ST62). With the operation, in the vehicle, since the energy conversion loss is not generated, the fuel economy during the fuel economy travel can be improved as well as the charge efficiency of the battery 40 can be also improved.

In contrast, when the integrated ECU 100 determines that the road does not incline downward, the integrated ECU 100 releases the regeneration control prohibition state of the motor/generator 80 (step ST63). With the operation, in the vehicle, the insufficient supply amount of electric power to the motor/generator 80 can be prevented at the time the EV travel is requested as described above.

Also at step ST3 of the second embodiment, when at least one of the determinations of FIGS. 5 to 11 explained above is executed and at least one of the respective determinations obtains a result that the regeneration control prohibition state of the motor/generator 80 is to be released, the regeneration control prohibition state is released. Note that, here, when, for example, a determination whether or not the regeneration control is necessary according to a gradient of a travel road is performed, an opposite result of determination may be obtained in FIG. 8 and in FIG. 11. In the case, it is sufficient to use the result according to a requested performance. When, for example, a priority is put on an improvement of the charge efficiency of the battery 40, it is sufficient to use the determination of FIG. 11 as the determination at the time.

As shown above, the vehicle control device of the second embodiment also makes it possible to improve the fuel economy during the fuel economy travel by stopping the engine and prohibiting the regeneration control during the inertia travel likewise the vehicle control device of the first embodiment. Then, when energy, which causes the predetermined fluctuation described above, is included in various types of energy in the vehicle during the inertia travel, the vehicle control device can suppress a degradation of performance caused by the fluctuation of energy by releasing the regeneration control prohibition state.

Incidentally, in the respective first and second embodiments described above, although the vehicle, on which the manual transmission is mounted, is exemplified, the present invention can be also applied to a vehicle, on which an automatic transmission is mounted, as long as the vehicle is a vehicle in which it is possible not to transmit power of a power source to drive wheels during the inertia travel, and the same effect can be obtained.

### Industrial Applicability

As described above, the vehicle control device according to the present invention is useful to a vehicle capable of performing an inertia travel and, in particular, the vehicle control device is suitable for a technology in which both a fuel economy performance at the time of inertia travel and a regeneration performance of kinetic energy at the time of inertia travel are achieved at the same time.

### Reference Signs List

- 10: ENGINE
- 12: STARTER MOTOR
- 14: COMPRESSOR
- 15: ALTERNATOR
- 20: MANUAL TRANSMISSION
- 21: INPUT SHAFT
- 23: GEAR SHIFT OPERATION DEVICE
- 23a: SHIFT LEVER
- 23b: SHIFT GAGE
- 30: CLUTCH
- 33: CLUTCH PEDAL
- 40: BATTERY
- 50: REGENERATION DEVICE
- 65: VEHICLE FORWARD/BACKWARD ACCELERATION DETECTING UNIT
- 66: VEHICLE SPEED DETECTOR
- 71: BRAKE DEVICE
- 72: FORWARD INFORMATION OBTAINING DEVICE
- 73: TURN SIGNAL LAMP
- 80: MOTOR/GENERATOR
- 100: INTEGRATED ECU
- 101: ENGINE ECU
- 102: REGENERATION ECU
- 103: MOTOR/GENERATOR ECU
- WL,: WR DRIVE WHEELS

## Claims

1. A vehicle control device of a vehicle that can travel with inertia without transmitting power of a power source to drive wheels and stops an operation of a mechanical power source that generates power by fuel during an inertia travel as well as prohibits a regeneration control of a regeneration device that regenerates kinetic energy during a travel, wherein
when it is estimated that predetermined energy in various types of energy in a vehicle fluctuates during the inertia travel, a regeneration control prohibition state of the regeneration device is released during the inertia travel.

2. The vehicle control device according to claim 1, wherein the fluctuation of the predetermined energy in the various types of energy is at least one of a fluctuation of thermal energy caused by a brake operation of a brake device, a fluctuation of electric energy of a battery, or a fluctuation of kinetic energy.

3. The vehicle control device according to claim 2, wherein whether or not thermal energy fluctuates by a brake operation of a brake device is estimated based on vehicle forward information of a driver's own vehicle or based on the vehicle forward information and operation information of a turn signal lamp.

4. The vehicle control device according to claim 2, wherein whether or not electric energy of a battery fluctuates is estimated based on information of a total power consumption of electric devices during the inertia travel, based on operation information of the turn signal lamp or based on information of a gradient angle or a gradient of a travel road.

5. The vehicle control device according to claim 2, wherein whether or not kinetic energy fluctuates is estimated based on information of a gradient angle or a gradient of a down-slope road.
